# EUROPEAN PATENT APPLICATION

(11) **EP 2 671 924 A1**
(43) Date of publication of application: **11.12.2013**
(21) Application number: 13170512.1
(22) Date of filing: 04.06.2013
(51) Int. Cl.: C08L 95/00, E01C 19/10

(54) **Bituminous conglomerates with high content of millings and relative process of preparation**

(30) Priority: 05.06.2012 IT MI20120977
(71) Applicant: Generalstrade S.p.A., 20030 Barlassina (Monza Brianza) (IT)
(72) Inventor: Fusi, Emanuele Gianmaria, 20030 Barlassina (Monza Brianza) (IT); Merzagora, Alessandra, 20030 Barlassina (Monza Brianza) (IT)
(74) Representative: Petruzziello, Aldo

(57) **Abstract**

A description is given of a bituminous conglomerate to be used for road pavements in the construction of base layers and/or connecting layers and/or wearing courses, comprising from 100% to lower quantities to 10% of millings with respect to the total weight of said conglomerate, the remaining part to 100 being constituted by fresh integration bitumen and/or virgin inert materials, said millings being treated by humidification and subsequent direct heating with hot air.

## Description

The present invention relates to bituminous conglomerates based on millings, preferably for laying with heat, for the construction of road pavements, preferably for surface wearing courses.

More particular the present invention relates to a process which is ecologically sustainable and with reduced atmospheric emissions in order to prepare bituminous conglomerates comprising high quantities of millings, generally higher than 30%, preferably higher than 70%, where the millings have been treated by humidification and subsequent direct heating with hot air rather than with direct flames.

Even more particularly the present invention relates to these bituminous conglomerates for wearing courses provided with improved mechanical properties such as stability on site and resistance to deformability (indirect tensile strength) wherein the inert materials are constituted for 100% by millings.

As is known a bituminous conglomerate is generally made up of a mix of aggregates (inert materials) of rocky stone materials such as sand, grout, fine grout and grit, of different particle size (granulometric distribution) and of fillers, which are all bound together through a bituminous-type binder, for example bitumen and/or polymer type.

By working on the granulometric distribution of the various inert materials, on the quantity of the different types of inert material and on the quantity and quality of the bitumen it is possible to obtain a variety of appropriate mixes (mix design) suitable for responding to the different constructional needs of road pavements and for fulfilling the performances in service foreseen by the various construction specifications for the various types of layers of paving to be built.

The environmental problems relating to the disposal of waste materials have led in recent years to reuse of the asphalt or bituminous millings of road pavements as raw material for the construction of new bituminous conglomerates, as an alternative to the use of fine virgin stone aggregates and bitumen.

The millings (RAP, reclaimed asphalt pavement) are in practice the product obtained from demolition by means of milling and/or crushing of old existing road pavements. Once milled and removed they can be sent to the production plant and here integrated with virgin inert materials and a little new binder, in order to be once again a new bituminous conglomerate ready for use.

The quantities of millings present in these conglomerates vary considerably according to the type of process used in order to obtain this new bituminous conglomerate and therefore the type of laying (with our without heat), arriving up to a maximum equal to approximately 70% by weight with respect to the total weight of the conglomerate, for laying with heat, even if the various specifications generally provide a millings content of up to 35%.

The abovementioned maximum value is due to the fact that the heating with direct flames which the millings have to undergo during the obtaining of the conglomerate entails such a worsening of the rheological properties of the bitumen, already undermined in that aged and oxidated, as to encourge phenomena such as thermal cracking and fatigue break.

It is for this reason that in known recycled conglomerates the addition, in the drying drum, of virgin bitumen or of other binders, and of virgin stone aggregates as integration is always required in order to obtain the specific mix design, the required granulometric range and the correct rheology of the overall binder (of the millings and that of integration), in addition to functional chemical activators and specific additives suitable for increasing the processability, the rigidity of the conglomerate and other features such as to meet the abovementioned specifications.

Moreover direct heating of the millings with direct flames can cause excessive encrustations inside the plant when the millings exceed the abovementioned quantities.

Additionally, while solving the environmental problems relating to disposal of the waste materials, the production of a bituminous conglomerate containing millings exhibits problems of harmful emissions, in terms of emissions of oxides of carbon, nitrogen or TOC, volatile organic compounds and of atmospheric emission of total dust (mg/Nmc), in particular when the millings used are in high quantities.

The object of the present invention is to provide a bituminous conglomerate, in particular for laying with heat, which comprises high quantities of millings, preferably higher than those used in the art, in order to increase the extent of the disposal of the millings without however worsening the final performances required of this conglomerate by the various construction specifications of road pavements.

A further object is to provide such a bituminous conglomerate which does not need high additions of fresh integration bitumen, in particular which does not require it at all, in order to obtain the correct mix design able to fulfil the performance and rheology requirements of said construction specifications.

Yet another object is that of providing such a conglomerate which can be produced by means of a simple process with reduced atmospheric emissions of harmful fumes and/or dust, such as for example volatile organic compounds, deriving from the use of bituminous substances and which allows the limit value permitted by the laws for these emissions.

These and other objects are achieved by the bituminous conglomerate in accordance with the invention having the features listed in the appended independent claim 1.

Advantageous embodiments of the invention are disclosed by the dependent claims.

The material according to the invention consists of a range of bituminous conglomerates to be used for road pavements in the construction of base layers and/or connecting layers and/or wearing courses, which comprise from 100% to lower quantities, for example to 70% or to 30% and also to 10% of millings with respect to the total weight of said conglomerate, the remaining part to 100 being constituted by fresh bitumen and/or virgin inert materials as integration.

These asphalt millings tendentially have a granulometric curve characterised by a high percentage of fine materials and contain aged bitumen: therefore the use of these millings replaces, partially or completely, the quantity of sand and bitumen necessary for a specific mix design.

The term "mix design" here is intended to identify the procedure of optimisation and control of the batching and type of binder (for the bitumen), of the quantity, granulometry, angularity, shape, % of filler (for the aggregates), of the percentage of the spaces or porosity, features whereon the performances in service of the conglomerates depend strongly, therefore allowing mixes to be provided that are correct from the structural standpoint and, at the same time, compatible with the constructional needs.

"Virgin inert materials" is intended here to identify all the natural aggregates coming from a quarry and not from recycled or waste material.

As is known, inert materials, also referred to as aggregates, for bituminous conglomerates are divided into very fine (fillers), fine and coarse according to their granulometry, and comprise, by way of an example, sand (fine), gravel/grout (coarse), fine grout/grit (coarse).

The bituminous conglomerate of the present invention also provides, in addition to the millings, the use of one or more of the following inert materials (aggregates):
- Mineral additives or fillers (such as for example those coming from grinding of calcareous rocks)
- Sand
- Grout
- Gravel

These aggregates or inert materials make up the skeleton of the bituminous conglomerate whose cohesion is guaranteed by the bitumen of the millings and by the optional fresh integration bitumen.

As mentioned the mix which constitutes the present bituminous conglomerate does not require the addition of fresh bitumen and can be substantially free of it since that contained in the millings is exploited to the maximum, thanks to the treatment which the millings undergo during the present process of preparation of the bituminous conglomerate.

In fact the Applicant has found that the bituminous conglomerate containing millings treated by means of humidification and direct heating with hot air, according to a process developed by the Applicant and described here in detail, exhibits improved features both of cohesion and of processability, ensuring optimal results in terms of rolling during laying and therefore of durability of the pavement, also when the millings constitute 100% of the bituminous conglomerate.

With the humidification and the direct heating with hot air, having preferably a temperature of at least 200°C, preferably of at least 250°C, it is possible to avoid the excessive drying of the bitumen contained in the millings, a phenomenon which takes place when the naked flame is in direct contact with the millings which is responsible for the worsening of the features of the aged bitumen: the result which can be attributed to the combination of the two abovementioned phases is an improvement in the behaviour of the mix, above all as regards the adhesive and cohesive features of the mix of bituminous conglomerate.

The direct air heating, instead of directly with naked flame, ensures moreover, similarly to what occurs in the process of quenching of steel, the obtaining of a material with improved mechanical properties, with respect to the thermal stress undergone by the bitumen which by definition is a material characterised by thermal sensitivity.

In practice this treatment of the millings allows the preparation of a bituminous conglomerate containing millings to 100% with the same technical and performance features of ordinary conglomerates, if not even improved, yet without a further contribution of fresh bitumen, with evident economic advantages.

The value and the quality of this bituminous conglomerate consists moreover in the fact that a substantial addition of bitumen is not found to be necessary, in that the bitumen present in the recycled millings is exploited and optimised.

This is advantageous from the point of view of the production process in that it is not necessary to add this bitumen in the drying drum, as instead takes place in the prior art, thus eliminating the considerable soiling problems of the drying drum walls.

The present bituminous conglomerate obtained by using a process developed by the Applicant has exhibited particular advantages in terms of final performances of the present conglomerate with respect to the same obtained with known traditional methods, in particular as regards the increase in the content of millings which cannot be reached with the known production methods.

Moreover the present production process has also exhibited advantages in the observance of the regulations on atmospheric emissions with respect to traditional systems wherein the burner is positioned in proximity of the drying drum, as will be described herein below in detail.

In general the percentage of additional fresh bitumen contained in the bituminous conglomerate may vary between 0% and 4% of the weight of the inert materials in the manufacturing of the different layers (base, binder and wearing course) and when the content of millings is less than 100%.

It should be noted that since the total content of bitumen in conventional bituminous conglomerates for wearing course is comprised between 3% and 7% of the weight of the stone materials, it is possible to add a quantity of fresh bitumen (correction bitumen) to the present conglomerate with millings such as to reach the bitumen total value required for obtaining the specific mix design and the rheology established by the specifications, also depending on the quantity of millings used.

Additional integration bitumens must also meet the requirements laid down for example by the standard UNI EN 12591:2002 "Bitumens and bituminous binders - specifications for paving grade bitumens" and comply with the specifications given in the respective standards for performance of the works or other standards provided by the contract specifications, such as for example the special contract specifications of the company Concessioni Autostradali Venete (CAV) or the SITEB specifications.

For the correct identification of the particle materials which constitute the virgin inert materials used here reference can be made to the standards on the subject of aggregates given in the various construction specifications, for example the standard CNR 139/92.

According to the end use of the bituminous conglomerate in the construction of wearing courses, base layers or connecting layers, the appropriate granulometry of the virgin aggregates will be chosen in order to fulfil the various construction specifications.

For example the aggregates for the use in road pavements will be able to meet the requirements laid down by the standard UNI EN 13043:2004 "Aggregates for bituminous mixtures and surface treatments for roads, airfields and other trafficked areas" and comply with the specifications given in the respective standards for performance of the works provided by the contract specifications, such as for example the special contract specifications of the company Concessioni Autostradali Venete or the SITEB specifications.

Moreover according to the end use of the bituminous conglomerate (for wearing course, base layer or connecting layer) the quantity of the aggregates, such as filler, sand, grout, gravel and their weight ratios will be chosen appropriately in order to confer those features and performances required by the end use on site of the bituminous conglomerate.

The present bituminous conglomerate with a millings base was subjected to different tests in order to determine the technical and performance features thereof in order to evaluate observance of the various specifications for the various end applications, in particular for wearing courses.

The volumetric tests and tests of determination of the percentage of the residual spaces performed on the bituminous conglomerate of the present invention for wearing courses containing 100% of millings (without bitumen and other additives added) have supplied optimal results, with values around 3.9%, which are perfectly in line with those provided by the specific standards, typically in the order of 3-5% (CNR-BU 39/73).

Moreover by means of the traditional method with Marshall compaction the control of the production and compliance of the mixes with the various specifications for wearing courses was carried out, and therefore ascertaining the more restrictive conditions thereof.

With the aim of checking the stability on site, understood as resistance to deformability and indication of mechanical strength of the present bituminous conglomerate containing 100% millings, the Marshall test was performed, in observance of the standard UNI EN 12697 for wearing course, and therefore the material was subjected to the more restrictive test conditions, which supplied the following values

| *Bituminous conglomerate with 100% millings* | Specimen 1 | Specimen 2 | Specimen 3 | Specimen 4 | *Average value* |
|---|---|---|---|---|---|
| Stability (kN) | 20.58 | 20.64 | 20.19 | 20.74 | 21.20 |
| Creep (mm) | 4.5 | 4.3 | 4.3 | 4.3 | 4.3 |
| Rigidity (kN/mm) | 4.7 | 4.9 | 4.9 | 5.0 | 4.8 |
| Apparent density (kg/m³) | 2385 | 2389 | 2384 | 2390 | 2387 |

It should be noted that bituminous conglomerates intended for wearing courses, also containing millings, are generally accepted when the following minimum values are reached:

| | SITEB specifications |
|---|---|
| Stability (kN) | > 11.75 |
| Rigidity (kN/mm) | 3.50 - 5.00 |

It is therefore evident that the average values of stability and rigidity of the present conglomerate containing 100% millings and intended for the construction of wearing courses have been found to be comparable if not even improved with respect to the minimum values of the known bituminous conglomerates for wearing courses with laying with heat which contain quantities of millings below 30%.

The bituminous conglomerate of the present invention is therefore found to be particularly high performance also when the millings represent 100% of the conglomerate, with respect to the physical and mechanical features presented above.

The physical and mechanical properties are good also in the case wherein the millings are contained in the present conglomerate in quantities below 100%, for example in quantities from 30 to 70% or higher than 70%.

It is in any case understood that the present bituminous conglomerate may also contain other additives normally used in the art of bituminous conglomerates such as polymer binders, mineral fibres, modified bitumen and the like according to the end use.

Moreover the present bituminous conglomerate may also contain appropriate quantities of natural bituminous sands, preferably from Albania and appropriately treated.

Contrarily to other known bituminous sands, the bituminous sands of natural origin of Albania are characterised by a granulometric uniformity such as to be able to define them monogranular.

In fact 99.5% of these sands pass through the 1 mm sieve and 5.7% pass through the 0.063 mm sieve.

More particularly said bituminous sands are fragmented into grains of particle size substantially similar and conforming to a granulometric curve given by the following sieves: sieves of 4 and 2 mm with 100% of passing material, sieve of 1 mm with 99.5% of passing material, sieve of 0.5 mm with 94.0% of passing material, sieve of 0.4 mm with 57.6% of passing material, sieve of 0.25 mm with 16.8% of passing material, sieve of 0.125 with 8.0% of passing material, sieve of 0.063 with 5.7% of passing material.

In fact they can be used as such, as fine aggregates, in the preparation of bituminous conglomerates since they are formed by fine aggregates having uniform granulometric distribution (monogranular sands) and substantially free from clay (very fine aggregates) so as not to require operations of sieving in order to remove coarse and/or very fine aggregates which otherwise would modify the prefixed mix design.

The granulometric curve of the natural bituminous sands of Albania is given here for the sake of comprehensiveness, referred to the percentage passing through the UNI ISO 3310-1 and UNI ISO 3310-2 series of sieves.

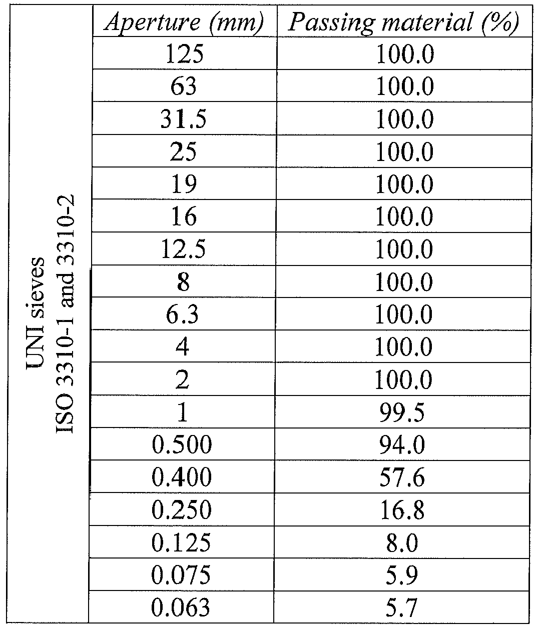

In practice said sands are provided with a specific granulometric distribution which defines exactly the percentage of each fraction thereof, i.e. the percentage of a given set of granules whose dimensions are comprised in a specific granulometric range.

The content of bitumen in these sands varies according to the deposit of origin yet is normally comprised between 1-50% of the total weight of the sand, generally equal to or lower than 30%, and/or in particular equal to or higher than 7%.

The test for the determination of the content of binder of the bituminous sands was performed with the *Soxhlet method,* referring to the standard CNR BU 38/73, and has led to the identification of the following ranges representative of sands deriving from the Albanian deposits analysed.

| *Bitumen content (%)* | Bituminous sand |
|---|---|
| Referred to the aggregates (sand) | 8.00 - 30.00 |
| Referred to the mix (sand + bitumen) | 7.00 - 25.00 |

In particular the aforesaid test led to the determination of the following values, calculated as average among the values of the samples used in the phase of research and deriving from the Albanian deposits analysed.

| *Bitumen content (%)* | Bituminous sand |
|---|---|
| Referred to the aggregates (sand) | 8.00-15.00 |
| Referred to the mix (sand + bitumen) | 7.00-14.00 |

These sands preferably have on average a bitumen content of approximately 10-12%.

The following can be listed as typical compositions of bituminous conglomerates in accordance with the present invention:
A) wearing courses

| | |
|---|---|
| - Mineral additives or fillers | 0-3% |
| - Sand | 0-20% |
| - Bituminous sand | 10-75% |
| - Grout | 0-20% |
| - Gravel | 0-30% |
| - total bitumen | 4-6% (of which 0-2% as correction) |

B) base layer

| | |
|---|---|
| - Mineral additives or fillers | 0-3% |
| - Sand | 0% |
| - Bituminous sand | 10-75% |
| - Grout | 20-40% |
| - Gravel | 30-50% |
| - total bitumen | 4-5% (of which 0-1% as correction). |

As mentioned above the good properties obtained by the present bituminous conglomerate containing high quantities of millings are due mainly to its process of preparation.

The process of preparation of the present bituminous conglomerate, developed by the

Applicant, consists of wetting with jets of water the millings, optionally in mixture with aggregates or as complete replacement of the same, and in heating them directly with hot air at high temperature rather than with burners with naked flame in contact with said millings: in this way it is possible to guarantee the maintaining of the quality and performance features of the bitumen already contained in the millings.

Moreover the presence of a section of specific treatment for the dust and fumes generated during the heating of the millings and during the optional addition of fresh bitumen allows the present preparation process to observe the minimum levels of the emissions generated by the process, via a series of operations which will be described subsequently.

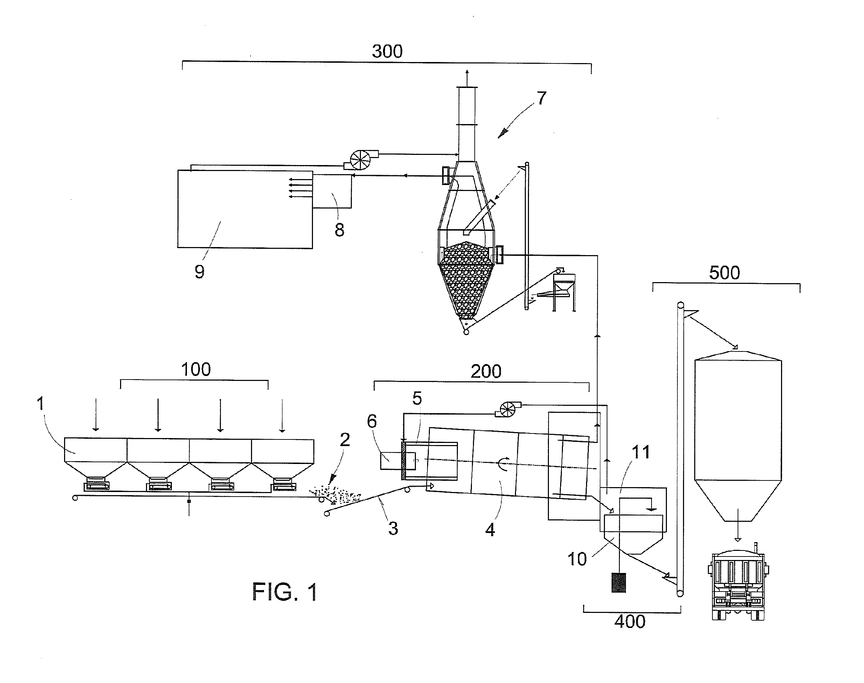

This process is carried out in an appropriate system which will be described herein below with reference to its simplified diagram illustrated in Figure 1 (attached to the present Application).

More particularly the process developed by the Applicant is characterised by the following steps:
a) humidification and/or wetting of millings (2), optionally mixed with inert materials, by spraying with jets of water;
b) feeding of the humidified material obtained in step a) to a rotating drying drum 4. This humidification takes place in a section 100 of system by means of nozzles for the humidification which spray water over the millings 2, optionally in mixture with aggregates, which are placed on a conveyor belt 3 upstream of said rotating drying drum 4.
c) Heating of said humidified millings, optionally in mixture with humidified inert materials, by means of direct contact with a flow of hot air, at a temperature of 200°C, preferably of at least 250°C, more preferably of 250-300°C, which is fed inside said rotating drying drum 4 containing said humidified millings, through a special conduit 5, insulated thermally, for the conveying of the heat. Said hot air is heated by a burner 6 positioned upstream of this rotating drum 4, and of said conduit 5, and in a back manner with respect to said rotating drum 4 in such a way that said humidified millings are not in direct contact with the flames of said burner 6.
d) Filtering/abatement of the aspirated fumes and dust exiting from said rotating drying drum 4 by means of a first abater or filtering chamber 7 with filtering granular inert materials through filtration in volume, monolayer or multilayer, and subsequent further filtering by means of a pre-filter with steel sponges 8, both placed upstream of a conventional bag filter 9 placed on a line of fumes discharge in the atmosphere.
   The fumes exiting from said bag filter 9 are then recycled in said abater 7 before being discharged into the atmosphere.
e) Optional addition of bitumen to said dried millings exiting said drying drum 4, optionally in a mixture with inert materials, in a mixer 10 placed under aspiration and having a temperature of at least 100°C, preferably at least 120°C, more preferably 150°-160°C, in order to obtain the bituminous conglomerate required.
f) Subsequent re-feeding into said burner 6 of the fumes aspirated by said mixer 10 during said step d) in order to obtain a further abatement of residues, in particular those of bituminous origin.

When the millings 2 are mixed with the inert materials, this mixture is prepared previously, before performing step a), in the section 100 of the system. This preparation consists of dividing the aggregates or inert materials into appropriate granulometric classes and of proportioning them appropriately according to the mix design adopted.

This operation takes place by means of hoppers 1 provided with feeding screw conveyors which discharge the respective aggregates onto a conveyor belt 3 which goes to feed said rotating drying drum 4.

As regards step a), it was found, on the basis of the tests carried out by the Applicant, that the humidification through a mist of vaporised water on the millings, and on the inert materials, if present, before the millings are heated, is found to be an optimal solution in order to avoid excessive drying of the bitumen contained in the millings, and the formation of surface encrustations inside the drying drum 4.

This phase of humidification is absent in the processes of preparation of known bituminous conglomerates containing millings.

As regards step b) of heating with hot air which takes place in a section of system denoted by reference numeral 200, it was ascertained that the backward position of the burner 6 with respect to the drying drum 4 allows the contact of the millings with the direct flames to be avoided when the millings are fed into the same drum 4. In this case the naked flame is prevented from altering the chemical and physical properties of the bitumen contained in the millings, jeopardising the technical and performance features of the finished conglomerate.

The change made by the Applicant with respect to the known systems of preparation of bituminous conglomerates containing millings consists therefore in providing the positioning of a connection piping 5 between the burner 6 and the rotating drum 4, which piping is insulated and appropriately dimensioned so as not to disperse heat. The configuration of the piping 5, in particular at its ends, allows the flame to be broken and to collect/convey all the heat inside the drying drum 4 in the form of a flow of hot air at high temperature. This flow of hot air allows the millings transiting inside the rotating drying drum 4 to heat in a uniform manner, without jeopardising the quality features thereof, in particular those of the bitumen contained in said millings.

As regards step c) of abatement/filtering of the dust and fumes aspirated by the drying drum containing humidity, it takes place in a section of system denoted by reference numeral 300 where the dust/fumes exiting the rotating drying drum 4 are conveyed, before arriving at a bag filter 9 for the discharge of fumes in the atmosphere, in an inerts material filter 7 with the function of retaining the suspended dust fractions and the possible other impurities and subsequently in a pre-filter with steel sponges 8, specially dimensioned for the capture of the coarser fractions of inert materials and possibly containing residues of bitumen.

These filters 7 and 8 are not provided in known systems.

In a preferred embodiment an injection of active carbons and calcium hydroxide is provided along the fumes line at the inlet and outlet of said abater/filter 7 for a more efficient abatement of the fumes and dust generated mainly in the drying drum 4.

The use of a bag filter 9, as instrument of final abatement on this line of discharge of fumes into the atmosphere, remains unchanged with respect to the known systems in that inside it the smaller particles are collected which have remained in suspension in the current of air exiting from the pre-filter 8. In the bag filter 9 the recovery also takes place of this dust which is re-fed into the production cycle, as filler, in the mixer 10 (line not illustrated in the drawing).

The very fine dust and/or the fumes exiting the bag filter 9 which were not abated by said filter 9 are conveyed inside the abater/filter 7 (e.g. by means of an aspirator) so as to treat further said fumes before being discharged into the atmosphere.

As regards step d) of optional mixing of the additional bitumen with the millings, optionally in a mix with the inert materials, it should be noted that this step takes place in a specific section of the present system, denoted by reference numeral 400, wherein step e) of fumes recovery and the optional adding of other conventional additives also take place.

Said step e) of recovery of the fumes from the mixer 10, be it of continuous type or discontinuous type, takes place through an airtight extractor hood 11 mounted on the mixer 10. The aspirated air is then conveyed and re-fed in front of the burner 6 in such a way as to obtain the complete abatement of possible residues and/or unburnt materials, in particular for those of bituminous origin.

This re-feeding in the burner 6 is not provided in known systems.

The bituminous conglomerate exiting the mixer 10 is then sent to a system section 500 for the storage of the finished product from where it will be taken for the successive transport into the road worksite.

It should be noted that the present process is particularly advantageous in that it does not present emissions of oxides of carbon and nitrogen or TOC not complying with regulations, since these compounds are recovered in full (all the fumes which are released in the process, including those generated possibly in the section 400 of mixing with fresh bitumen, are sent into the filtering section 300 and duly treated with various filtering means described above) and re-fed into the production cycle so as to obtain the complete abatement of the volatile organic compounds deriving from the use of bituminous substances, and the emission into the atmosphere of minimum levels of total dust (expressed in mg/Nmc), with respect to the limit value permitted by the standard, avoiding therefore all the environmental problems deriving from the manufacture of known bituminous conglomerates.

In practice the specific abatement of the pollutants present in the fumes in combination with the treatment of the millings (humidification and heating with air) as developed in the present process makes it possible to use up to 100% of millings in the preparation of bituminous conglomerates, which otherwise could not be produced seeing the excessive pollution of the surrounding environment which the use of millings entails.

It should be noted that in the case wherein the present bituminous conglomerate has a content of millings below 70%, like those known in the art, and also contains bituminous sands, it can be obtained by also blending the various components described above according to known methods in known systems where the various ingredients are mixed with heat (e.g. 150°C approximately).

In these known systems the aggregates, after having been divided into appropriate granulometric classes and proportioned, are subsequently dried together with the millings in a rotating drying drum heated by a burner and subsequently blended with the integration bitumen in the blending section (mixer): the bituminous sands will be fed only to the blending section (mixer) in which the correction bitumen is added, rather than to the drying drum 4, in order to avoid an excessive soiling of said drum and the addition of integration bitumen.

The bituminous sands which were fed into the mixer are in turn heated according to the principle of the transmission of heat between bodies in that they enter into direct contact with the hot inert materials also fed into said mixer.

The conglomerate obtained is then transferred and subsequently transported as far as the place of laying, maintaining the mix at a temperature suitable for processing.

The spreading or laying of the present bituminous conglomerate with millings takes place by means of vibratory finishing machines according to the techniques known in the art of constructions of road pavements.

The present invention is not limited to the particular embodiments described previously and illustrated in the accompanying drawings, but instead numerous detail changes may be made thereto within the reach of the person skilled in the art, without thereby departing from the scope of the same invention, as defined in the appended claims.

## Claims

1. Process for preparing a bituminous conglomerate for road pavements comprising from 100% to lower amounts down to 10% of millings with respect to the total weight of said conglomerate, the remaining part to 100 being constituted by virgin inert materials, and optionally fresh integration bitumen, said process comprising the following steps:
a) humidification and/or wetting of millings (2), optionally mixed with inert materials, by spraying of water;
b) feeding to a drying drum (4) of the humidified material obtained in step a), by means of a conveyor (3) placed upstream of said drying drum (4);
c) heating of said humidified and/or wetted millings, optionally mixed with humidified inert materials, by direct contact with a hot air flow, preferably having a temperature of at least 200°C, preferably of at least 250°C, fed inside said drying drum (4), said flow of hot air being heated by a burner (6) placed upstream of said drum (4) and backwards with respect to it in such a way that said humidified millings are not in direct contact with the flames of said burner (6),
said process being **characterised in that** the dust and the fumes inside said drying drum (4) are extracted by means of aspiration and filtered by means of an abater or filtering chamber (7) with granular inert materials and subsequently filtered further by means of a pre-filter with steel sponges (8), said abater (7) and said pre-filter (8) being both placed upstream of a conventional bag filter (9) placed on a line of fumes discharge into the atmosphere, the fumes exiting from said bag filter (9) being recycled in said abater (7) before being discharged into the atmosphere.

2. Process according to claim 1 wherein, after step b), said dried millings, exiting from said drying drum (4) and optionally mixed with inert materials, are added with integration bitumen and/or conventional additives for bituminous conglomerates such as polymer binders, mineral fibres, modified bitumen and the like according to the end use, in a mixer (10), placed under aspiration and having a temperature of at least 100°C, preferably at least 120°C, more preferably of 150-160°C, in order to obtain the bituminous conglomerate required.

3. Process according to claim 2 wherein the fumes aspirated from said mixer (10) are fed to said burner (6) and/or to a section (300) for the treatment of the fumes comprising said abater or filtering chamber (7) with granular inert materials, said pre-filter with steel sponges (8) and said one conventional bag filter (9), in order to obtain further abatement of residues, particularly those of bituminous origin.

4. Process according to any one of the preceding claims wherein when the millings (2) are mixed with the virgin inert materials (aggregates), this mix is prepared previously before performing step a), in a section (100), dividing said inert materials into appropriate granulometric classes and proportioning them appropriately according to the mix design adopted.

5. Process according to any one of the preceding claims wherein on the fumes line in input and in output from said abater (7) an injection of active carbons and calcium hydroxide is provided.

6. Bituminous conglomerate, preferably for laying with heat, to be used for road pavements in the construction of base layers and/or connecting layers and/or wearing courses, comprising from 100% to lower quantities down to 10% of millings with respect to the total weight of said conglomerate, the remaining part to 100 being constituted by virgin inert materials and/or fresh integration bitumen, said millings being treated by humidification and subsequent heating by means of direct contact with hot air having a temperature of at least 200°C, preferably of at least 250°C.

7. Bituminous conglomerate according to claim 6 wherein the content of fresh integration bitumen varies between 0% and 4% with respect to the weight of the inert materials when used for wearing courses, for base layers and/or connecting layers.

8. Bituminous conglomerate according to claim 6 or 7 wherein the millings are present in quantities lower than 100% down to 70%.

9. Bituminous conglomerate according to claim 8 wherein the millings are present in quantities lower than 70% down to 30%.

10. Bituminous conglomerate according to any one of the preceding claims 6-9 wherein the virgin inert materials are one or more of the following aggregates
- Fillers or mineral additives (for example those coming from the grinding of calcareous rocks)
- Sand
- Bituminous sands, preferably monogranular sands of Albania
- Grout
- Gravel

11. Bituminous conglomerate according to any one of the preceding claims 6-10 further comprising conventional additives for bituminous conglomerates such as polymer binders, mineral fibres, modified bitumen and the like according to the end use.
